# EUROPEAN PATENT APPLICATION

(11) **EP 1 796 361 A1**
(43) Date of publication of application: **13.06.2007**
(21) Application number: 07090005.5
(22) Date of filing: 30.03.2000
(51) Int. Cl.: H04M 11/00, H04M 1/725, H04Q 7/32, H04L 12/56

(54) **Mobile Telephone comprising means for forwarding data and control signals between base station and peripheral device**

(62) Divisional of application: 00912998.2
(71) Applicant: MITSUBISHI DENKI KABUSHIKI KAISHA, Tokyo 100-8310 (JP)
(72) Inventor: Ohta, Masako c/o Mitsubishi Denki Kabushiki Kaisha, Tokyo 100-8310 (JP); Saga, Ikuo c/o Mitsubishi Denki Kabushiki Kaisha, Tokyo 100-8310 (JP)
(74) Representative: Pfenning, Meinig & Partner GbR

(57) **Abstract**

A mobile telephone (1) comprises a telephone communication means (11) for transmitting and receiving data and signals with a related device (201) through a telephone circuit, a wireless communication means (13) for transmitting and receiving data and signals with a peripheral device (101), an input means (17) for converting an user operation into an operational signal, and a control means (20) for controlling various sections in response to the operational signal
control means executes at least one of a first forwarding process and a second forwarding processing, the first forwarding process forwarding the data or signals from the peripheral device (101) received by the wireless communication means (13) to the related device (201) with the telephone communication means (11), and the second forwarding process forwarding the data or signals from the related device (201) received by the telephone communication means (11) to the peripheral device (101) with the wireless communication means (13).

## Description

### TECHNICAL FIELD

This invention relates to a mobile telephone having a remote control function for a peripheral device.

### BACKGROUND ART

Fig. 1 is a block diagram of a conventional mobile telephone as disclosed for example in JP-A-11-55748. In the figure, reference numeral 501 denotes a transmission/reception section which performs two-way communication with a mobile telephone 504 using radio waves as a medium. 502 is a vehicle-mounted unit including an anti-theft device 521, an air conditioner unit 522, an engine control unit 523 and the like. 503 is a control section which has a central processing unit (CPU) 531 for controlling various other sections in response to an input signal, and an interface 532 between the CPU 531 and the vehicle-mounted unit 502.

504 denotes a conventional mobile telephone which has a remote-control function for the vehicle-mounted unit 502. In the mobile telephone 504, reference numeral 541 denotes a telephone functional section which executes transmission and reception of calls through an antenna 542. 543 is a remote control functional section which transmits commands for remote control of the vehicle-mounted unit 502 through an antenna 544 and which receives, through the antenna 544, signals indicating the operational state of the vehicle-mounted unit 502. 545 is a selection switch which switches its operation from one of the telephone functional section 541 and the remote control functional section 543 to the other. 546 is a CPU which turns the operations of the telephone functional section 541 and the remote control functional section 543 ON and OFF in response to the state of the selection switch 545 and which controls various other sections. 547 is a microphone, 548 is a speaker, 549 is a display and 550 is a key switch.

Next, the operation of the conventional mobile telephone will be described below.

In the mobile telephone 504, when the selection switch 545 is turned to the ON position, the operation of the telephone functional section 541 is switched to the ON-state. When the key switch 550 is operated in this state, a telephone function such as transmission or reception of calls is executed by the telephone functional section 541.

On the other hand, when the selection switch 545 is turned to the OFF position, the operation of the remote control functional section 543 is switched to the ON-state. When the key switch 550 is operated in this state, a command for remote-control operation of the vehicle-mounted unit 502 is transmitted by the remote control functional section 543. The transmission/reception section 501 receives this command and the control section 503 controls the vehicle-mounted unit 502 in accordance with the command. At this time, a signal indicating the operational state of the vehicle-mounted unit 502 is transmitted in response. When the remote control functional section 543 receives this signal, the CPU 546 performs a corresponding display of the operational state of the vehicle-mounted unit 502 on the display 549.

Other conventional examples of mobile telephones are disclosed in JP-A-9-233549, JP-A-9-284409 and JP-U-6-29243.

Since the conventional mobile telephone is constituted as described above, it is necessary to operate a selection switch in order to switch between a telephone function and a remote control function, and thus, the problem has arisen that such a cumbersome selection operation must be performed.

The present invention has the object of providing a mobile which can forward data or signals from a peripheral device to a related device through a telephone circuit and which can transfer data or signals supplied from the related device through the telephone circuit to the peripheral device.

### DISCLOSURE OF THE INVENTION

According to the present invention, a mobile telephone executes at least one of a first forwarding process and a second forwarding process. The first forwarding process forwards data or signals from a peripheral device received by the wireless communication means to a related device with the telephone communication means. The second forwarding process forwards data or signals from the related device received by the telephone communication means to the peripheral device with the wireless communication means. In this manner, the advantageous effect is obtained that, in addition to the voice signals, it is possible to transfer a control signal and various types of data between the peripheral device and the related device. Furthermore, it is possible to improve and add the functions of the peripheral device.

In the mobile telephone of the present invention, the wireless communication means may communicate with a navigation device as a peripheral device. In this manner, the advantageous effect is obtained that it is possible to easily monitor a position of a vehicle on which a navigation device is mounted, by using a position detection function of the navigation device.

In the mobile telephone of the present invention, the telephone communication means may establish a circuit with the related device in response to a control signal from the peripheral device which is received by the wireless communication means.

In the mobile telephone of the present invention, the telephone communication means may forward the data which is received from the peripheral device by the wireless communication means, to the related device in response to a control signal from the related device which received by the telephone communication means. In this manner, the advantageous effect is obtained that the obtained data, makes it possible to confirm the operational state of the peripheral device with a remote related device.

In the mobile telephone of the present invention, the wireless communication means may forward to a peripheral device a control signal for controlling the peripheral device which is received by the telephone communication means. In this manner, the advantageous effect is obtained that it is possible to control a peripheral device from a remote related device and to reduce the operations performed by the user on the peripheral device.

In the mobile telephone of the present invention, the wireless communication means may forward to the peripheral device the data which is received from the related device by the telephone communication means, in response to a control signal from the peripheral device which is received by the wireless communication means. In this manner, the advantageous effect is obtained that it is possible to retrieve data required by a peripheral device from a remote related device in a suitable timeframe.

In the mobile telephone of the present invention, services are provided using the data from the related device received by the telephone communication means. In this manner, the advantageous effect is obtained that it is possible for the mobile telephone and the peripheral device to retrieve the same data from the related device, and to provide services based on that data even when a user carrying the mobile telephone is separated from the peripheral device.

In the mobile telephone of the present invention, the wireless communication means may forward the data received from the peripheral device by the wireless communication means, to another peripheral device. In this manner, the advantageous effect is obtained that it is possible to retrieve data retained in a certain peripheral device with another peripheral device. It is also possible to provide a plurality of services with a single peripheral device.

In the mobile telephone of the present invention, the telephone communication means may forward the data received from the related device to another related device. In this manner, the advantageous effect is obtained that it is possible to share the same data in a plurality of related devices disposed at mutually remote locations.

### BRIEF DESCRIPTION OF THE DRAWINGS

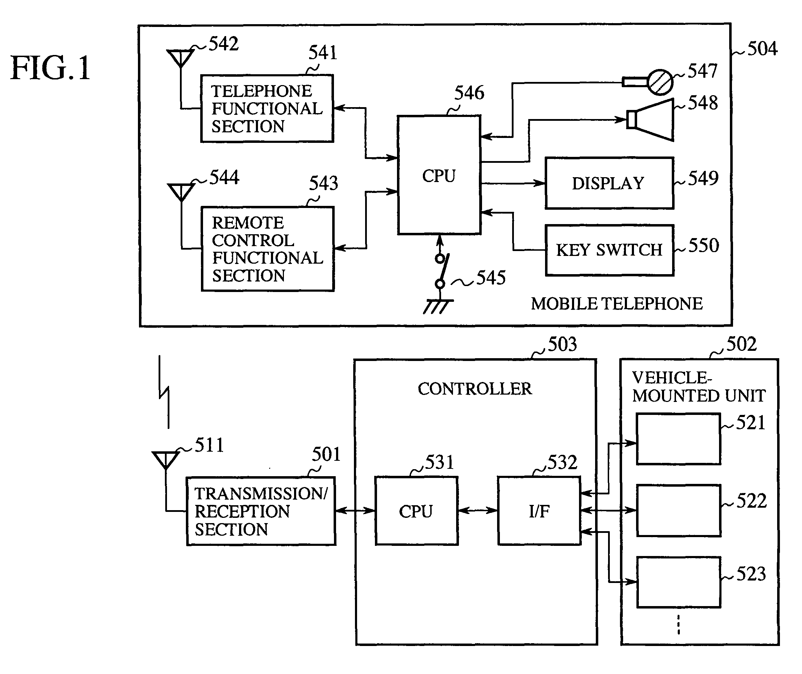

Fig. 1 is a block diagram showing the structure of a conventional mobile telephone.
Fig. 2 is a block diagram of a mobile telephone according to a first embodiment of the present invention.
Fig. 3 is a perspective view showing an example of a stand on which a mobile telephone is placed.
Fig. 4 is a sectional view describing the operation of a disposition detection means.
Fig. 5 is a flowchart describing a function selection process in the mobile telephone according to the first embodiment.
Fig. 6 is a flowchart describing a function selection process in a mobile telephone according to a second embodiment.
Fig. 7 is a flowchart describing a function selection process in a mobile telephone according to a third embodiment.
Fig. 8 is a flowchart describing an operation of a mobile telephone according to a fourth embodiment.
Fig. 9 is a flowchart describing a communication process in a mobile telephone according to a fifth embodiment.
Fig. 10 is a flowchart describing a communication process in a mobile telephone according to a sixth embodiment.
Fig. 11 is a flowchart describing a communication process in a mobile telephone according to a seventh embodiment.
Fig. 12 is a flowchart describing a communication process in a mobile telephone according to an eighth embodiment.
Fig. 13 is a block diagram of a mobile telephone according to a ninth embodiment.
Fig. 14 is a flowchart describing a peripheral device data forwarding process in the mobile telephone according to the ninth embodiment.
Fig. 15 is a block diagram of a mobile telephone according to a tenth embodiment.
Fig. 16 is a flowchart describing a related device data forwarding process in the mobile telephone according to the tenth embodiment.

### BEST MODE FOR CARRYING OUT THE INVENTION

In order to describe the invention in greater detail, the preferred embodiments will be outlined below with reference to the accompanying figures.

### Embodiment 1

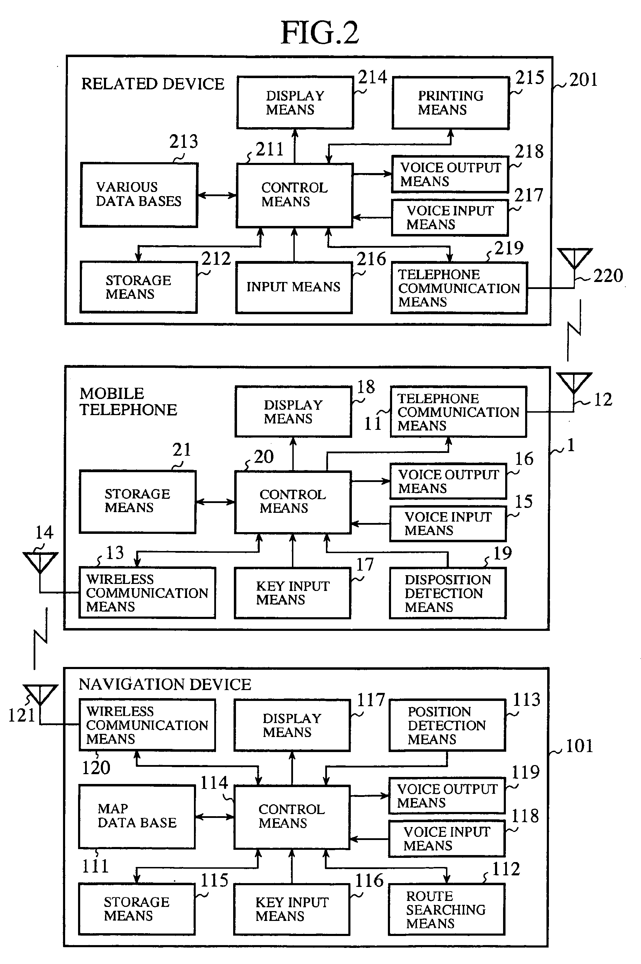

Fig. 2 is a block diagram of a mobile telephone according to a first embodiment of the present invention. In Fig. 2, reference numeral 1 denotes a mobile telephone which can perform remote operation of a peripheral device. 101 is a vehicle-mounted navigation device (a peripheral device). 201 is a related device which is arranged in a remotely located office for instance and which communicates with the mobile telephone 1 through a telephone circuit including a mobile telephone circuit or PHS (personal handyphone system) circuit.

In the mobile telephone 1, reference numeral 11 denotes a telephone communication means which transmits and receives data, voice signals and the like through the telephone circuit by an antenna 12. 13 is a wireless communication means which transmits and receives data, control signals and the like with the navigation device 101 through an antenna 14. 15 is a voice input means such as a microphone which converts voice into voice signals. 16 is a voice output means such as a speaker which outputs voice signals as voice. 17 is a key input means (operation input means) which converts a user operation into an operation signal. 18 is a display means such as a liquid crystal display. 19 is a disposition detection means which detects that the housing of the mobile telephone 1 is placed on a predetermined stand. 20 is a control means which controls various sections of the mobile telephone 1 in response to the operational signal from the key input means 17 and which operates one of the telephone communication means 11 and the wireless communication means 13 in response to whether or not the housing is placed on the predetermined stand. 21 is a storage means such as a memory which stores data.

In the navigation device 101, reference numeral 111 denotes a map database which stores map data. 112 is a route searching means which searches a route from a present position to a destination with a method such as a Dijkstra method or the like. 113 denotes a position detection means such as a GPS (Global Positioning System) receiver which detects the present position. 114 is a control means which controls various sections of the navigation device 101 in response to operational signals from a key input means 116. 115 is a storage means such as a memory which stores data. 116 is a key input means which converts a user operation into an operation signal. 117 is a display means such as a liquid crystal display which displays map information for example. 118 is a voice input means such as a microphone which converts voice into voice signals. 119 is a voice output means such as a speaker which outputs the voice signals such as a voice guide as voice. 120 is a wireless communication means which transmits and receives control signals, data and the like with the mobile telephone 1 through an antenna 121.

In the related device 201, reference numeral 211 denotes a control means which controls various sections of the related device 201 in response to an operational signal from an input means 216. 212 is a storage means which stores data and the like. 213 denotes various types of databases which store the data used in the navigation device 101 and the mobile telephone 1. 214 is a display means such as a liquid crystal display or a CRT (Cathode Ray Tube). 215 is a printing means such as a printer. 216 is an input means such as a keyboard. 217 is a voice input means such as a microphone which converts voice into a voice signal. 218 is a voice output means such as a speaker which outputs the voice signal as voice. 219 is a telephone communication means which transmits and receives the data and the voice signal through the telephone circuit by an antenna 220.

The control means 20, 114, 221 can be realized as a CPU and an interface with the various sections. In that case, programs for the above processes are prestored in the ROM (Read Only Memory) or the hard disk device of the storage means 21, 115, 212. The programs are loaded on the RAM (Random Access Memory) of the storage means 21, 115, 212 and executed by the CPU.

In addition to the communication using weak radio waves, the wireless communication means 13, 120 can adapt infrared communication or the recently widely-discussed Blue Tooth technology. In that case, a reception and transmission device is used corresponding to the adopted communication method instead of the antenna 14, 121.

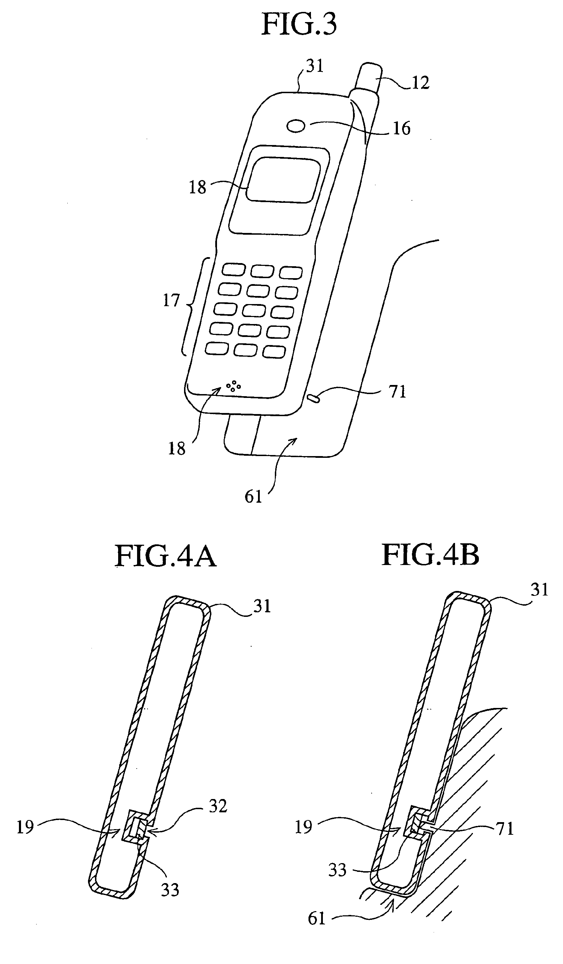

Fig. 3 is a perspective view showing an example of a stand on which the mobile telephone 1 is placed. Fig. 4 is a sectional view describing the operation of a disposition detection means 19.

The disposition detection means 19 of the mobile telephone 1 has a pressure-operated switch structure. As shown in Fig. 3 and Fig. 4, when the housing 31 of the mobile telephone 1 is placed on the stand 61 provided on the console of a vehicle for example, a projection 71 provided on the stand 61 is inserted into a hole 32 and depression of a contact element 33 is detected.

In addition to a method of such a mechanical detection, a method of electrical detection by providing contact terminals in the housing 31 and the stand 61 or a method of magnetic detection by providing a magnet or an electro-magnet embedded in the stand 61 may also be adapted for the disposition detection means 19. Next, the operation of a mobile telephone in the first embodiment will be described below.

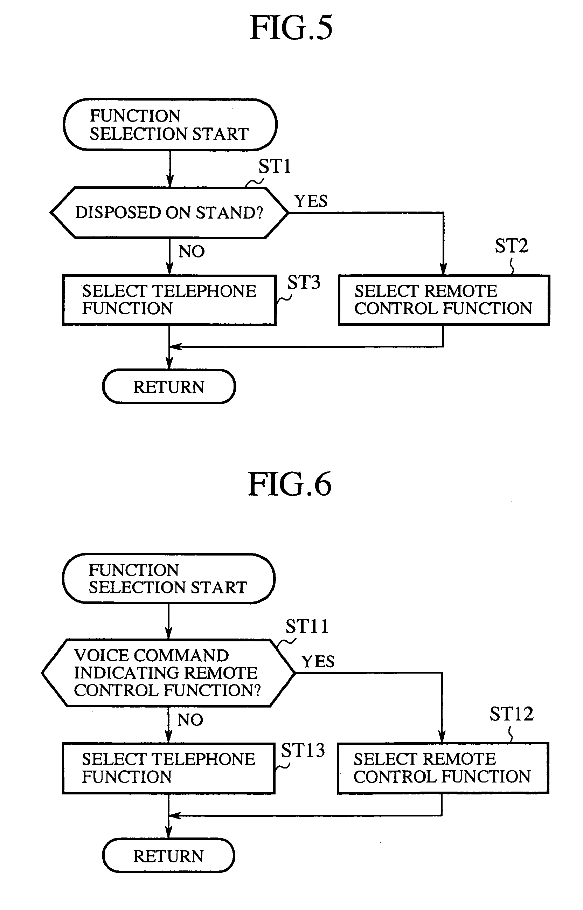

Fig. 5 is a flowchart describing a function selection process in the mobile telephone 1 according to the first embodiment.

The disposition detection means 19 of the mobile telephone 1 determines whether or not the housing 31 of the mobile telephone 1 is placed on the stand 61 and notifies the result of the determination to the control means 20. The control means 20 uses the notification to determine whether or not the housing 31 of the mobile telephone 1 is placed on the stand 61 (step ST1). When the housing 31 of the mobile telephone 1 is placed on the stand 61, the control means 20 operates the wireless communication means 13 and utilizes the voice input means 15, the voice output means 16, the key input means 17 and the display means 18 for a remote control function (step ST2). When a user operates the key input means 17, a command corresponding to the operation is transmitted to the navigation device 101 through an antenna 14 by the wireless communication means 13. The wireless communication means 120 of the navigation device 101 receives the command through an antenna 121 and supplies it to the control means 114. The control means 114 executes the command.

On the other hand, when the housing 31 of the mobile telephone 1 is not placed on the stand 61, the control means 20 operates the telephone communication means 13 and utilizes the voice output means 15, the voice output means 16, the key input means 17 and the display means 18 for a telephone function (step ST3). When a user operates the key input means 17, the transmission and reception of calls and other telephone functions are executed.

As described above, according to the first embodiment, one of the telephone communication means 11 and the wireless communication means 13 is operated in response to whether or not the housing 31 is placed in a predetermined stand 61. Thus, the advantageous effect is obtained that rapid operational selection can be executed without operating a switch by merely disposing the mobile telephone 1 on the stand 61.

### Embodiment 2

According to a second embodiment of the present invention, when a voice signal from the voice input means 15 corresponds to a predetermined voice signal, a control means 20 of a mobile telephone 1 switches its operation from one of the telephone communication means 11 and the wireless communication means 13 to the other.

Since the other components of the mobile telephone 1 in the second embodiment are the same as those described with respect to the first embodiment, additional description will be omitted. However, in the second embodiment, it is not particularly necessary to provide a disposition detection means 19, the stand 61 and the projection 71.

Next, the operation of the mobile telephone in the second embodiment will be described below.

Fig. 6 is a flowchart describing a function selection process in a mobile telephone 1 according to a second embodiment.

In the mobile telephone 1 of the second embodiment, when a predetermined voice command is input to the voice input means 15, the control means 20 determines whether or not the voice signal from the voice input means 15 corresponds to the voice command for operation selection of the remote control function (step ST11).

When the voice signal corresponds to a voice command for operation selection of the remote control function, the control means 20 operates the wireless communication means 13 and uses the voice input means 15, the voice output means 16, the key input means 17 and the display means 18 for the remote control function (step ST12).

On the other hand, when the voice signal does not correspond to a voice command for operation selection of the remote control function, the control means 20 operates the telephone communication means 11 and uses the voice input means 15, the voice output means 16, the key input means 17 and the display means 18 for a telephone function (step ST13).

Since the other operations are the same as those described with reference to the first embodiment, additional description will be omitted. However, when a disposition detection means 19 is not provided, operation selection as described in the first embodiment is not executed.

As described above, according to the second embodiment, when the voice signal from the voice input means 15 is a predetermined voice signal, the operation is switched from one of the telephone communication means 11 and the wireless communication means 13 to the other. Thus, the advantageous effect is obtained that rapid operational selection is executed without the operation of a switch or the like. Furthermore, the advantageous effect is obtained that it is possible to reduce the cost of the mobile telephone 1 since a selection switch need not be provided.

Furthermore, it is possible to add the function of the mobile telephone according to the second embodiment to the mobile telephone according to the first embodiment. In this manner, the advantageous effect of the second embodiment is obtained in addition to that of the first embodiment.

### Embodiment 3

According to a third embodiment of the present invention, when a call signal is received by the telephone communication means 11, the control means 20 of a mobile telephone 1 switches its operation from the wireless communication means 13 to the telephone communication means 11.

Yince the other structure of the mobile telephone 1 according to the third embodiment is the sane as that described with reference to the first embodiment, additional description will be omitted. However, it is not particularly required to provide a disposition detection means 19, a stand 61 and a projection 71.

Next, the operation of the mobile telephone in the third embodiment will be described below.

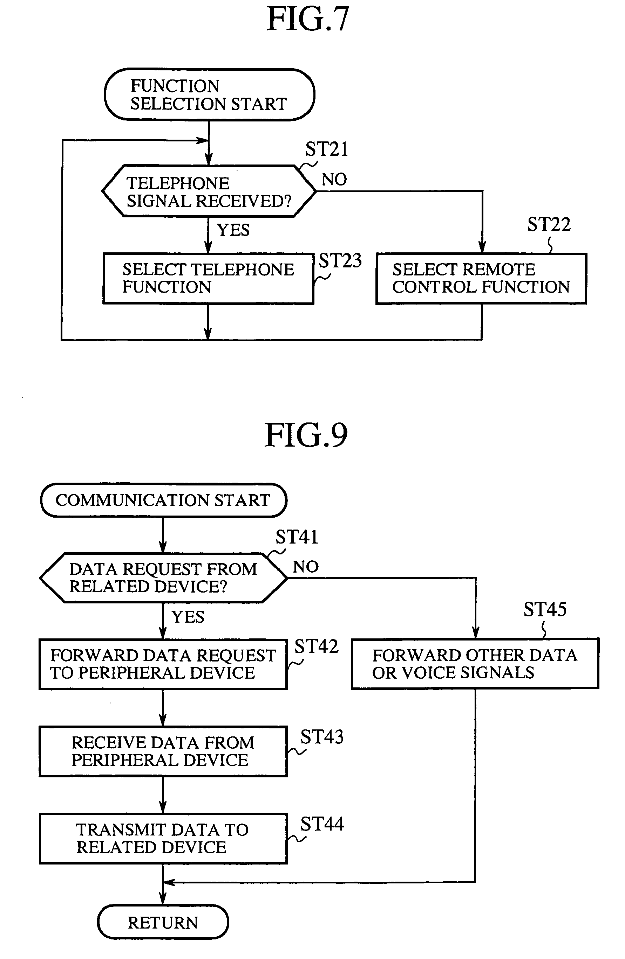

Fig. 7 is a flowchart describing the function selection operation in a mobile telephone 1 according to a third embodiment of the present invention.

When the remote control function is being executed, the control means 20 of the mobile telephone 1 monitors whether or not a call has been received by the telephone communication means 11 (step ST21). When it is not confirmed that a call signal has been received by the telephone communication means 11, the remote control function is continued without switching (step ST22), and when it is confirmed that a call signal has been received by the telephone communication means 11, the operation is switched to the telephone function (step ST23).

Since the other operations are the same as those described with reference to the first embodiment, additional description will be omitted. However, when a disposition detection means 19 is not provided, operation selection as described with reference to the first embodiment is not executed.

As described above, according to the third embodiment, when a call signal is received by the telephone communication means 11, the operation is switched from the wireless communication means 13 to the telephone communication means 11. Thus, the advantageous effect is obtained that rapid operational selection is executed without the operation of a switch. In particular, since it is necessary for a user to immediately use the telephone function when a call is received, it is preferred that it is possible to execute the rapid operational selection.

Furthermore, it is possible to add the function of the mobile telephone according to the third embodiment to the mobile telephone according to the first embodiment or the second embodiment. In this manner, the advantageous effect of the third embodiment is obtained in addition to the advantageous effect of those embodiments.

### Embodiment 4

According to a fourth embodiment of the present invention, the control means 20 of a mobile telephone 1 executes a first forwarding process and a second forwarding process. In the first forwarding process, voice signals, data or the like, which are received from the navigation device 101 through the wireless communication means 13, are forwarded to the related device 201 by the telephone communication means 11. In the second forwarding process, voice signals, data or the like, which are received from the related device 201 through the telephone communication means 11, are forwarded to the navigation device 101 by the wireless communication means 13.

Since the other structure of the mobile telephone 1 according to the fourth embodiment is the same as that described with reference to the first embodiment, additional description will be omitted. However, it is not particularly required to provide a disposition detection means 19, a stand 61 and a projection 71.

Next, the operation of the mobile telephone in the fourth embodiment will be described below.

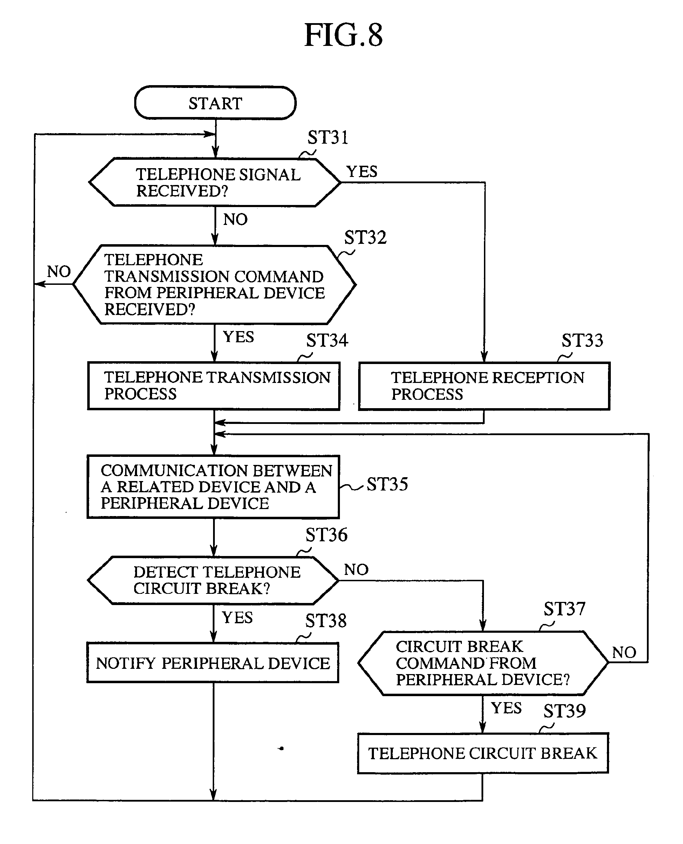

Fig. 8 is a flowchart describing the operation of the mobile telephone 1 according to the fourth embodiment of the present invention.

The control means 20 of the mobile telephone 1 monitors whether or not a call has been received by the telephone communication means 11 and whether or not a telephone transmission command from the navigation device 101 has been received by the wireless communication means 13 (step ST31 and step ST32). When a call is received by the telephone communication means 11, a reception process is executed by the telephone communication means 11 and a circuit is established with the related device 201 (step ST33). When a telephone reception command is received by the wireless communication means 13, a transmission process is executed by the telephone communication means 11 and a circuit is established with the related device 201 (step ST34). In the navigation device 101, when a predetermined operation is performed on the key input means 116, a circuit breaking command (described below) or a telephone transmission command is transmitted to the mobile telephone 1.

After a circuit is established between the related device 201 and the mobile telephone 1, the transfer of the data, the voice signals or the like is executed between the related device 201 and the mobile telephone 1 (step ST35).

For example, a voice signal obtained from the voice input means 118 of the navigation device 101 is forwarded to the related device 201 through the mobile telephone 1, and voice corresponding to the voice signal is output from the voice output means 218 of the related device 201. In the same manner, a voice signal obtained from the voice input means 218 of the related device 201 is forwarded to the navigation device 101 through the mobile telephone 1, and voice corresponding to thee voice signal is output from the voice output means 118 of the navigation device 101.

Furthermore, map data, vehicle destination data and character messages are for example forwarded from the related device 201 through the mobile telephone 1 to the navigation device 101. In this manner, it is possible to provide instructions or messages about a destination from the related device 201 to a commercial vehicle. Further, it is also possible to use the related device 201 to effect update or addition of the data (for example map data) used in the navigation devices 101 which are mounted in a plurality of vehicles. Thus, the operation can be simplified.

Furthermore, the current position of the vehicle retrieved by the position detection means 113 is forwarded from the navigation device 101 through the mobile telephone 1 to the related device 201. In this manner, it is possible to simplify processing various vehicle positions.

The communication is continued until a circuit is cut off by the related device 201 or a circuit break command is received from the navigation device 101 (step ST36, step ST37). When the circuit is cut off by the related device 201, the control means 20 notifies that fact to the navigation device 101 with the wireless communication means 13 (step ST38). When the notification is received, the navigation device 101 executes a post-process for terminating the communication. Furthermore, when the circuit break command is received from the navigation device 101, the control means 20 cuts off the circuit with the telephone communication means 11 (step ST39).

As described above, according to the fourth embodiment, the control means 20 executes a first forwarding process which forwards signals or data, received from a navigation device 101 through the wireless communication means 13, through the telephone communication means 11 to a related device 201, and a second forwarding process which forwards signals or data, received from the related device 201 through the telephone communication means 11, to the navigation device 101 through the wireless communication means 13. Thus, in addition to the transfer of voice signals, it is possible to transfer control signals or various types of data between the related device 201 and the navigation device 101. Therefore, the advantageous effect is obtained that it is possible to add and improve the function of the navigation device 101 and to simplify the processing of the position of a vehicle on which a navigation device 101 is mounted.

Furthermore, it is possible to add the function of the mobile telephone according to the fourth embodiment to the mobile telephone according to the first embodiment, the second embodiment or the third embodiment. In this manner, the advantageous effect of the fourth embodiment is obtained in addition to the advantageous effect of those embodiments.

### Embodiment 5

According to a fifth embodiment of the present invention, the control means 20 of the mobile telephone 1 forwards the data, received from the navigation device 101 by the wireless communication means 13, to the related device 201 by the telephone communication means 11 in response to a control signal from the related device 201 received by the telephone communication means 11. The other structure is the same as that described with reference to the fourth embodiment, additional description will be omitted.

Next, the operation of the mobile telephone in the fifth embodiment will be described below.

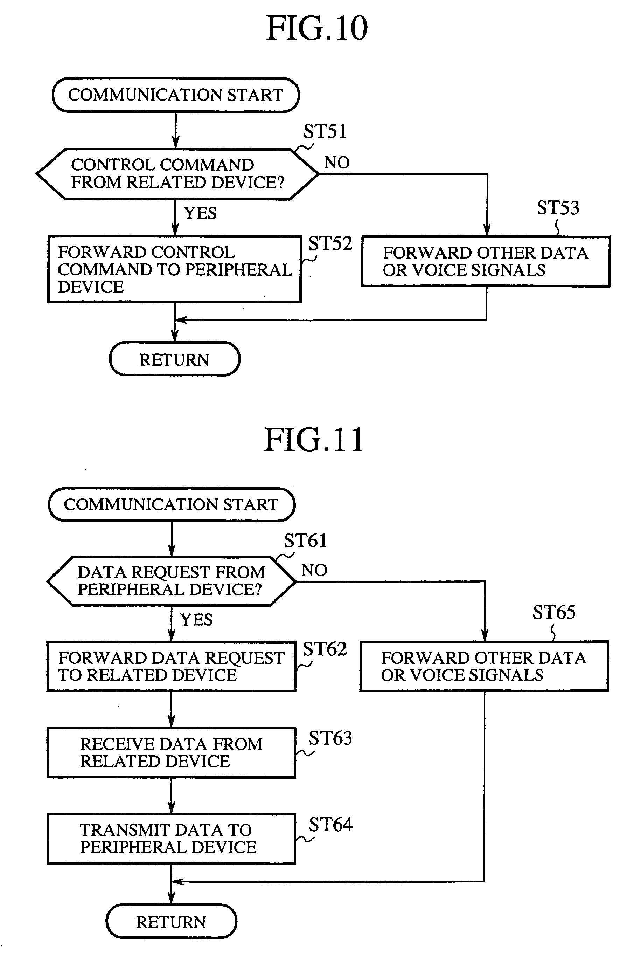

Fig. 9 is a flowchart describing the communication process in a mobile telephone 1 according to the fifth embodiment.

When the communication process in the step ST35 as shown in Fig. 8 is performed, the control means 20 of the mobile telephone 1 determines whether or not a data request from the related device 201 has been received by the telephone communication means 11 (step ST41). When a data request is received from the related device 201, the data request is forwarded to the navigation device 101 by the wireless communication means 13 (step ST42). The navigation device 101 transmits data indicated by the received data request to the mobile telephone 1. When the data is received by the wireless communication means 13 (step ST43), the control means 20 of the mobile telephone 1 forwards the data to the related device 201 with the telephone communication means 11 (step ST44).

On the other hand, when the data request is not received from the related device 201, transmission and reception of other voice signals or data is effected between the related device 201 and the navigation device 101 (step ST45).

Since the other operations are the same as those described with reference to the fourth embodiment, additional description will be omitted.

As described above, according to the fifth embodiment, data received from the navigation device 101 by the wireless communication device 13 is forwarded to the related device through the telephone communication means 11 in response to a control signal (data request) from the related device 201 received by the telephone communication means 11. Thus, the advantageous effect is obtained that it is possible to confirm the state (present position or the like) of the navigation device 101 by a remote related device 201 based on the retrieved data.

### Embodiment 6

According to a sixth embodiment of the present invention, the control means 20 of the mobile telephone 1 forwards control signals (control commands) for controlling the navigation device 101, received by the telephone communication means 11, to the navigation device 101 with the wireless communication means 13. The other structure is the same as that described with reference to the fourth embodiment, additional description will be omitted.

Next, the operation of the mobile telephone in the sixth embodiment will be described below.

Fig. 10 is a flowchart describing the communication process in a mobile telephone 1 according to the sixth embodiment of the present invention.

When the communication process in the step ST35 as shown in Fig. 8 is performed, the control means 20 of the mobile telephone 1 determines whether or not a control command for controlling the navigation device 101 has been received by the telephone communication means 11 (step ST51). When the control command has been received, the control command is forwarded by the wireless communication means 13 (step ST52). The navigation device 101 executes the control command when receiving the control command.

For example, when a control command for route searching is supplied from the related device 201 to the navigation device 101 together with destination data, the route from the current position to the destination is provided to the driver of a vehicle such as a transport truck or a taxi without operation by the driver of the vehicle.

On the other hand, when the control command has not been received by the telephone communication means 11, transmission and reception of other voice signals or data is effected between the related device 201 and the navigation device 101 (step ST53).

Since the other operations are the same as those described with reference to the fourth embodiment, additional description will be omitted.

As described above, according to the sixth embodiment, the control command for controlling the navigation device 101 received by the telephone communication means 11 are forwarded to the navigation device 101 by the wireless communication means 13. Thus, the advantageous effect is obtained that it is possible to control a navigation device 101 from a remote related device 201. Furthermore, it is possible to reduce the user operations on the navigation device 101. In particular, it is possible to improve driver safety during vehicle operation by reducing the operations performed by a user (the driver of a vehicle) on the navigation device 101.

### Embodiment 7

According to a seventh embodiment of the present invention, the control means 20 of the mobile telephone 1 forwards data received from the related device 201 by the telephone communication means 11 to the navigation device 101 with the wireless communication means 13 in response to a control signal from the navigation device 101 received by the wireless communication means 13. The other structure is the same as that described with reference to the fourth embodiment, additional description will be omitted.

Next, the operation of the mobile telephone in the seventh embodiment will be described below.

Fig. 11 is a flowchart describing the communication operation in the mobile telephone 1 according to the seventh embodiment.

In the mobile telephone 1 according to the seventh embodiment, as the communication process in the step ST35 shown in Fig. 8, the control means 20 determines whether or not a data request from the navigation device 101 has been received by the wireless communication means 13 (step ST61). When a data request from the navigation device 101 has been received, the data request is forwarded by the telephone communication means 11 to the related device (step ST62). The related device 201 transmits data indicated by the data request to the mobile telephone 1 when the data request is received. When the data is received by the telephone communication means 11 (step ST63), the control means 20 of the mobile telephone 1 forwards the data to the navigation device 101 by the wireless communication means 13 (step ST64).

On the other hand, when a data request from the navigation device 101 is not received by the wireless communication means 13, transmission and reception of other voice signals or data is performed between the related device 201 and the navigation device 101 (step ST65).

Since the other operations are the same as those described with reference to the fourth embodiment, additional description will be omitted.

As described above, according to the seventh embodiment, data received from the related device 201 by the telephone communication device 11 is forwarded to the navigation device 101 by the wireless communication means 13 in response to a control signal from the navigation device 101 received by the wireless communication means 13. Thus, the advantageous effect is obtained that it is possible to retrieve data required by the navigation device 101 from a remote related device 201 in a suitable timeframe.

Furthermore, it is possible to add the function of the mobile telephone according to the seventh embodiment to the mobile telephone according to the sixth embodiment. In this manner, the advantageous effect of the seventh embodiment is obtained in addition to the advantageous effect of the sixth embodiment.

### Embodiment 8

According to an eighth embodiment of the present invention, the mobile telephone 1 is adapted to provide various services using data from the related device 201 received by the telephone communication means 11. Since the other structure is the same as that described with reference to the fourth embodiment, additional description will be omitted.

Next, the operation of the mobile telephone in the eighth embodiment will be described below.

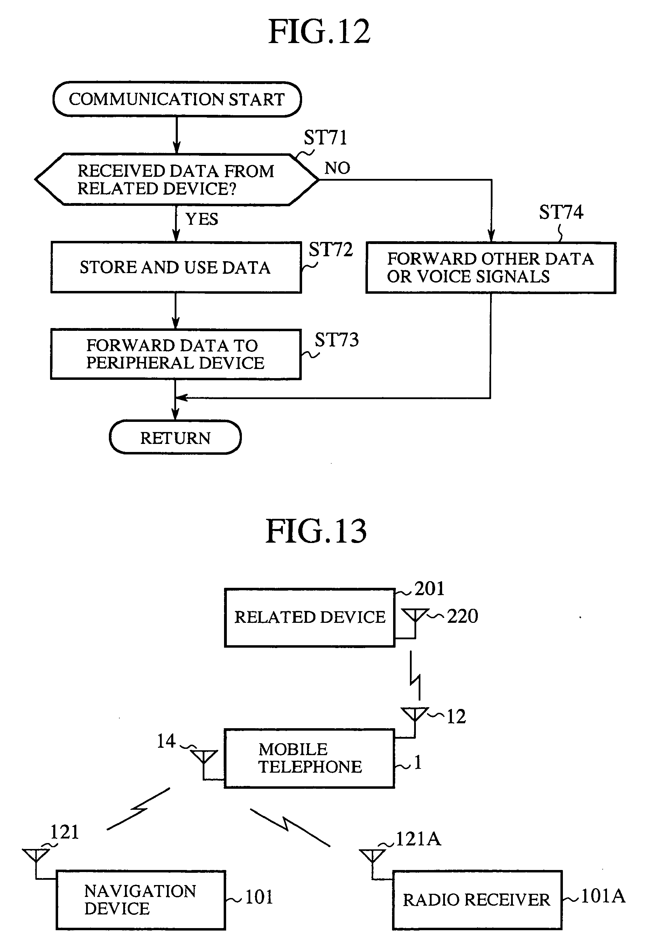

Fig. 12 is a flowchart describing the communication process in a mobile telephone 1 according to the eighth embodiment.

The control means 20 determines whether or not data from a related device 201 has been received by the telephone communication means 11 (step ST71). When the data (for example, character message or the like) from the related device 201 has been received by the telephone communication means 11, the data is stored in a storage means 21 if the address of that data is the mobile telephone 1. Thereafter, the data is used with respect to various types of services (step ST72). For example, when a character message is received, the control means 20 of the mobile telephone 1 stores the character message in the storage means 21 and displays it on the display means 18. The control means 20 forwards the data to the navigation device 101 with the wireless communication means 13 (step ST73). On the other hand, when other data or voice signals are received by the wireless communication means 13, transmission and reception of the other voice signals or data is performed normally between the related device 201 and the navigation device 101 (step ST74).

Since other operations are the same as those described with reference to the fourth embodiment, additional description will be omitted.

As described above, according to the eighth embodiment, services are provided using data from the related device 201 received by the telephone communication means 11. Thus, it is possible for the navigation device 101 and the mobile telephone 1 to retrieve the same data from the related device 201. As a result, the advantageous effect is obtained that services (for example the transmission of the character messages to a user) can be supplied based on that data even when a user carrying a mobile telephone 1 is separated from the navigation device 101.

Furthermore, it is possible to add the function of the mobile telephone according to the eighth embodiment to the mobile telephone according to the sixth or seventh embodiment. In this manner, the advantageous effect of the eighth embodiment is obtained in addition to that of the sixth or seventh embodiment.

### Embodiment 9

Fig. 13 is a block diagram of a mobile telephone 1 according to a ninth embodiment of the present invention. In the figure, reference numeral 101A denotes a radio receiver (a peripheral device) which can receive FM (Frequency Modulation) teletext. The receiver 101A performs communication with the mobile telephone 1 through an antenna 121A by the wireless communication means in the same manner as the navigation device 101.

In the ninth embodiment, a control means 20 of a mobile telephone 1 forwards data from a peripheral device (for example, the radio receiver 101A), received by the wireless communication means 13, to another peripheral device (for example, the navigation device 101) by the wireless communication means 13. Since other structure is the same as that described with reference to the fourth embodiment, additional description will be omitted.

Next, the operation of the mobile telephone in the ninth embodiment will be described below.

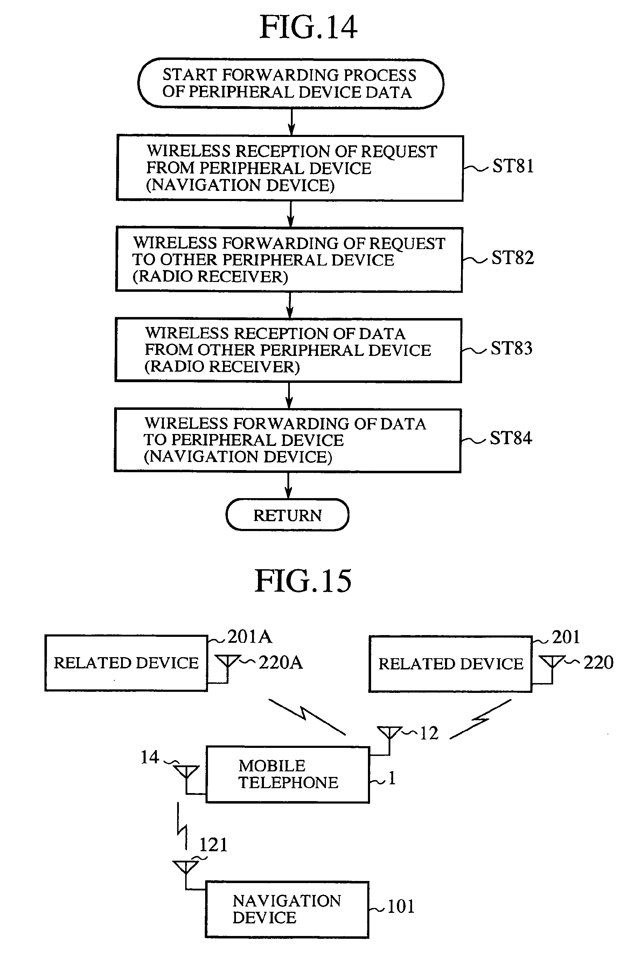

Fig. 14 is a flowchart describing the data forwarding process for a peripheral device in the mobile telephone 1.

When a predetermined operation is performed on the key input means 17 of the mobile telephone 1, a data forwarding process is executed between the peripheral devices. In the data forwarding process between the peripheral devices, a data request is transmitted from the navigation device 101 as required. When the data request is received by the wireless communication means 13 (step ST81), the control means 20 of the mobile telephone 1 forwards the data request to the radio receiver 101A with the wireless communication means 13 (step ST82).

When the data request is received, the radio receiver 101A transmits the required data (for example, received character information). When the data is received by the wireless communication means (step ST83), the control means 20 of the mobile telephone 1 forwards the data to the navigation device 101 by the wireless communication means (step ST84). When the data is received, the navigation device 101 provides various services based on that data. For example, when character information received by the radio receiver 101A is received, the navigation device 101 displays the character information on the display means 117.

Since other structure is the same as that described with reference to the fourth embodiment, additional description will be omitted.

As described above, according to the ninth embodiment, data from the peripheral device received by the wireless communication means 13 is forwarded to another peripheral device with the wireless communication means 13. Thus, the advantageous effect is obtained that it is possible to retrieve data retained in a certain peripheral device with the another peripheral device. As a result, it is possible to provide a plurality of services (for example, displaying the route guiding information and the character information related to traffic conditions on a single screen) with a single peripheral device.

### Embodiment 10

Fig. 15 is a block diagram showing a mobile telephone 1 according to a tenth embodiment of the present invention. In the figure, reference numeral 201A denotes a related device similar to the related device 201.

In the mobile telephone 1 of the tenth embodiment, the control means 20 forwards data from the related device 201 received by the telephone communication means 11 to another related device 201A with the telephone communication means 11. The other structure is the same as that described with reference to the fourth embodiment, additional description will be omitted.

Next, the operation of the mobile telephone in the tenth embodiment will be described below.

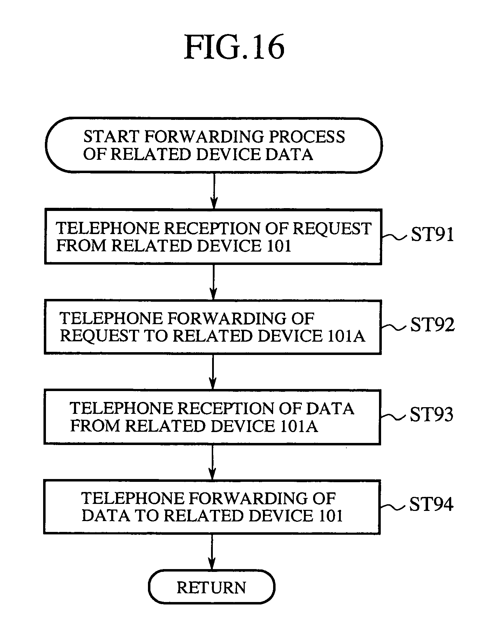

Fig. 16 is a flowchart describing the data forwarding process for a related device in the mobile telephone 1.

When a predetermined operation is performed on the key input means 17 of the mobile telephone 1, a data forwarding process between the related devices is executed. In the data forwarding process, a data request is transmitted from one of the related devices 201 as required. When the data request is received by the telephone communication means 11 (step ST91), the control means 20 of the mobile telephone 1 forwards the data request to the other related device 201A with the telephone communication means 11 (step ST92) .

When the data request is received, the other related device 201A transmits the required data. When the data is received by the telephone communication means 11 (step ST93), the control means 20 of the mobile telephone 1 forwards the data to the related device 201 by the telephone communication means 11 (step ST94). The related device 201 receives that data.

Since other operations are the same as those described with reference to the fourth embodiment, additional description will be omitted.

As described above, according to the tenth embodiment, data from a related device 201 received by the telephone communication means 11 is forwarded to another related devices 201A by the telephone communication means 11. Thus, the advantageous effect is obtained that it is possible to share the data in mutually remotely disposed related devices 201, 201A through the mobile telephone 1.

In the above embodiments, although a radio receiver 101A and a navigation device 101 are used as a peripheral device, other equipments may also be used as a peripheral device. Furthermore, a peripheral device is not limited to the vehicle-mounted equipment.

### INDUSTRIAL APPLICABILITY

As stated above, a mobile telephone according to the present invention is adapted to perform remote control operations on a peripheral device and to forward data or various signals between a related device and a peripheral device.

## Claims

1. A mobile telephone comprising:
a telephone communication means for transmitting and receiving data and signals with a related device through a telephone circuit;
a wireless communication means for transmitting and receiving data and signals with a peripheral device;
a voice input means for converting voice into a voice signal;
a voice output means for converting a voice signal into voice;
an operational input means for converting an operation into an operational signal;
a control means for controlling various sections in response to the operational signal, said control means executing at least one of a first forwarding process and a second forwarding processing, the first forwarding process forwarding the data or signals from the peripheral device received by the wireless communication means to the related device with the telephone communication means, and the second forwarding process forwarding the data or signals from the related device received by the telephone communication means to the peripheral device with the wireless communication means.

2. The mobile telephone according to Claim 1,
wherein the telephone communication means establishes a circuit with the related device in response to a control signal from the peripheral device which is received by the wireless communication means.

3. The mobile telephone according to Claim 1,
wherein the telephone communication means forwards the data from the peripheral device received by the wireless communication means to the related device in response to a control signal from the related device which is received by the telephone communication means.

4. The mobile telephone according to Claim 1,
wherein the wireless communication means forwards a control signal for controlling the peripheral device, which is received by the telephone communication means, to the peripheral device.

5. The mobile telephone according to Claim 1,
wherein the wireless communication means forwards the data, which is received from the related device by the telephone communication means, to the peripheral device in response to a control signal from the peripheral device which is received by the wireless communication means.

6. The mobile telephone according to Claim 1,
wherein a service is provided using the data from the related device received by the telephone communication means.

7. The mobile telephone according to Claim 1,
wherein the wireless communication means forwards the data received from the peripheral device to another peripheral device.

8. The mobile telephone according to Claim 1,
wherein the telephone communication means forwards the data received from the related device to another related device.
